# EUROPÄISCHE PATENTSCHRIFT

(11) **EP 4 318 806 B1**
(45) Veröffentlichungstag und Bekanntmachung des Hinweises auf die Patenterteilung: **10.07.2024**
(21) Anmeldenummer: 22188151.9
(22) Anmeldetag: 01.08.2022
(51) Int. Cl.: H01Q 9/04, H01Q 1/22

(54) **MODULARE ANTENNE FÜR EINE RFID-LESEVORRICHTUNG**
MODULAR ANTENNA FOR AN RFID READER
ANTENNE MODULAIRE POUR UN DISPOSITIF LECTEUR RFID

(43) Veröffentlichungstag der Anmeldung: 07.02.2024
(73) Patentinhaber: SICK AG, 79183 Waldkirch (DE)
(72) Erfinder: Pudenz, Florian, 22359 Hamburg (DE)

(56) Entgegenhaltungen:
- US-A1- 2021 111 491
- US-B1- 6 456 247
- US-B1- 9 904 822
- "Broadband Microstrip Antennas", 1 January 2003, ARTECH HOUSE, Norwood, MA, USA, ISBN: 978-1-58053-244-0, article GIRISH KUMAR ET AL: "Broadband Microstrip Antennas", pages: i - 407, XP055337084

## Beschreibung

Die Erfindung betrifft ein Verfahren zur Herstellung einer modularen Antenne nach Anspruch 1.

RFID-Lesevorrichtungen dienen der Identifikation von Objekten und Waren und werden unter anderem eingesetzt, um logistische Bewegungen zu automatisieren. An einem Identifikationspunkt, vor allem bei einem Wechsel des Besitzers der Ware oder einem Wechsel des Transportmittels, werden an den Waren befestigte RFID-Transponder ausgelesen und gegebenenfalls Informationen in den Transponder zurückgeschrieben. Die erfassten Informationen werden verwendet, um die Weiterleitung und Sortierung von Gütern und Produkten zu steuern. Wichtige Anwendungen für die automatische Identifikation sind logistische Verteilerzentren, etwa von Paketversendern, oder die Gepäckaufgabe in Flughäfen.

Die RFID-Lesevorrichtung regt über ihre Antenne durch elektromagnetische Strahlung in ihrem Lesebereich befindliche RFID-Transponder zur Abstrahlung der gespeicherten Information an, empfängt die entsprechenden Transpondersignale und wertet sie aus. Dazu wird häufig der UHF-Frequenzbereich (Ultrahochfrequenz) verwendet, da es hier in dem Standard ISO 18000-6 einen etablierten Rahmen gibt und zudem Transponder in unterschiedlichen Entfernungen von einigen Millimetern bis hin zu mehreren Metern ausgelesen werden können. UHF-RFID-Transponder sind in sehr kompakten Bauformen verfügbar und können dementsprechend auch an sehr kleinen Objekten angebracht werden.

Die jeweilige Anwendungssituation erfordert unterschiedliche Eigenschaften und Bauformen der RFID-Lesevorrichtung, denn es sind beispielsweise RFID-Transponder aus unterschiedlicher Richtung und in unterschiedlichen Entfernungen zu lesen, und es steht unterschiedlich viel Bauraum für eine RFID-Lesevorrichtung zur Verfügung. Dementsprechend werden herkömmlich Produktfamilien mit jeweiligen Gerätevarianten für die unterschiedlichen Anwendungen angeboten. Für die Gerätevarianten wird dabei bislang jeweils eine eigene Antenne benötigt. Das verfügbare Volumen für den Aufbau einer Antenne beeinflusst maßgeblich deren möglichen Eigenschaften. Deshalb werden jeweilige Antennen entwickelt, die sich in ihren Abmessungen unterscheiden, um für ein gegebenes Volumen die besten Antenneneigenschaften etwa in Bezug auf den Antennengewinn zu erreichen. Die Entwicklung schließt Einzelkomponenten der Antenne ein, die speziell auf eine Bauform angepasst werden. Das führt zu einer großen Anzahl unterschiedlicher Komponenten und damit längeren Entwicklungszeiten, da die Komponenten für jeden Antennentyp einzeln neu optimiert werden, zudem über die Produktlebenszeit zu Mehraufwänden bei Produktpflege, Lagerhaltung und Materialverfügbarkeit.

Die US 1 745 342 beschreibt, wie die Richtwirkung einer Dipolantenne durch zusätzliche Resonatoren verbessert werden kann. Damit ergeben sich grundsätzliche Optimierungsmöglichkeiten, wie sie in der soeben beschriebenen herkömmlichen Entwicklung genutzt werden können, aber der Aufwand für die individuelle Optimierung jeweiliger Antennen für jede spezielle Bauform einer RFID-Lesevorrichtung wird dadurch nicht geringer.

Die EP 2 790 269 A1 offenbart eine Patchantenne mit einem flächenartigen Resonatorelement, das eine komplexe Struktur aus Schlitzen und Vorsprüngen aufweist. Aus der EP 2 811 575 A1 ist eine weitere Patchantenne bekannt, die eine zu einem zweidimensionalen Muster gefaltete Schlitzstruktur zum Einspeisen und/oder Abgreifen eines elektromagnetischen Signals aufweist. Das sind zwei Beispiele von Dokumenten, die für eine RFID-Lesevorrichtung optimierte Antennen vorstellen. Die Optimierungen sind gerätespezifisch, so dass über eine größere Produktfamilie wie erläutert ein erheblicher Entwicklungs- und Produktpflegeaufwand anfällt.

In der EP 3 553 886 A1 wird eine Antenne mit einem dielektrischen Substrat beschrieben, an dessen einer Fläche ein Antennenelement und an dessen anderer Fläche ein Massenelement angeordnet ist, mit einer Metallplatte im Abstand zu dem Antennenelement, die größer ist als das Massenelement. Eine besondere Anpassung an eine RFID-Lesevorrichtung, geschweige denn eine Produktfamilie, ist nicht angesprochen.

Die WO 2005/034290 A1 befasst sich mit einer modularen Patchantenne, die ein erstes Modul mit einer Metallschicht, einer dielektrischen Schicht und einer metallischen Masseschicht und ein zweites Modul mit einem Rahmen aufweist. In dem zweiten Modul können alternativ nur eine dielektrische Schicht oder dieselben drei Schichten vorgesehen sein wie in dem ersten Modul. Das schafft nur eine äußerst begrenzte Flexibilität, die nicht für eine Produktfamilie von RFID-Lesevorrichtungen ausreicht.

Die US 9 904 822 B1 offenbart einen kontaktlosen Kartenleser. Ein Antennenmodul kann wahlweise in ein quadratisches, horizontales oder vertikales Gehäuse eingebaut werden.

Aus der US2021/0111491 A1 ist eine Patchantenne bekannt, über deren Abstrahlelement ein parasitäres Element zur Verbesserung des Antennengewinns angeordnet ist. In einer Versuchsreihe wurde der Antennengewinn in der horizontalen Ebene verschiedene Geometrien des parasitären Elements vermessen, mit dem Ergebnis, dass der höchste Gewinn erzielt wird, wenn die obere horizontale Kante des parasitären Elements kürzer als diejenige des Antennenelements ist und das parasitäre Element das Antennenelement in vertikaler Richtung überragt.

Es ist daher Aufgabe der Erfindung, eine verbesserte Antenne für eine RFID-Lesevorrichtung anzugeben.

Diese Aufgabe wird durch ein Verfahren zur Herstellung einer modularen Antenne nach Anspruch 1 gelöst. Die modulare Antenne wird mit vorgegebenen oder gewünschten Abmessungen und mit vorgegebenen oder gewünschten Antenneneigenschaften hergestellt. Die Abmessungen erlauben bestimmte Bauformen und damit auch Montagepositionen der Antenne oder einer RFID-Lesevorrichtung mit der Antenne. Zu den Antenneneigenschaften zählen beispielsweise Frequenzbereich, Gewinn (Gain), Öffnungswinkel, Achsenverhältnis, Front-to-Back Ratio, Anpassung und/oder Stehwellenverhältnis (VSWR, Voltage Standing Wave Ratio).

Es wird eine Vielzahl von untereinander gleichartigen Basiselementen hergestellt. Dazu werden auf dem jeweiligen Basiselement ein Kopplungselement, ein Anschluss und eine Hochfrequenzverbindung dazwischen angeordnet. Das Kopplungselement strahlt in der zusammengesetzten Antenne ein RFID-Signal über einen Radiator ab beziehungsweise empfängt es. An dem Anschluss lässt sich die Antenne über eine Hochfrequenzleitung an einen Transceiver anschließen. Die Hochfrequenzverbindung, beispielsweise mindestens eine Mikrostreifenleitung, leitet Hochfrequenzsignale in beide Richtungen zwischen Kopplungselement und Anschluss weiter. Die Verbindung kann direkt sein, oder es ist zwischen Kopplungselement und Anschluss noch mindestens ein weiteres Element vorgesehen. Das Basiselement ist insbesondere eine entsprechend bestückte Platine.

Eines der so entstandenen Basiselemente wird anschließend in ein Gehäuse eingesetzt. Dies kann in einigem zeitlichen Abstand und an einem anderen Ort erfolgen, die Herstellung der Basiselemente und das Zusammensetzen einer Antenne aus einem solchen Basiselement sind prinzipiell voneinander entkoppelt. Je nach Ausführungsform ist das Gehäuse beispielsweise ein Antennengehäuse einer externen Antenne oder das Gehäuse einer RFID-Lesevorrichtung mit interner Antenne.

Die Erfindung geht von dem Grundgedanken aus, eine modulare Antenne aus einem der untereinander gleichartigen Basiselemente mit individuellen Eigenschaften auszustatten, indem verschiedene Gehäuse beziehungsweise Radiatoren eingesetzt werden. Es wird eine Vielzahl von unterschiedlichen Gehäusen vorgehalten, die jeweils das Basiselement aufnehmen können. Durch Auswahl eines bestimmten Gehäuses wird die vorgegebene Bauform beziehungsweise werden die vorgegebenen Abmessungen erreicht. Entsprechend wird eine Vielzahl von unterschiedlichen Radiatoren vorgehalten, die jeweils mit dem Basiselement beziehungsweise dessen Kopplungselement zusammenwirken können. Vorzugsweise passt jeder Radiator in jedes Gehäuse, es ist aber auch denkbar, dass mindestens einer der Radiatoren nur in bestimmten der Gehäuse einsetzbar ist, d.h. dass dann nur bestimmte Kombinationen von Radiatoren und Gehäusen möglich sind. Es wird einer der Radiatoren ausgewählt und in einer Kopplungsposition, insbesondere in einem Kopplungsabstand, zu dem Kopplungselement in das Gehäuse eingesetzt. Der Radiator ist vorzugsweise nicht leitend angebunden.

Eine denkbare Auswahl ist der Verzicht auf einen Radiator. Das Kopplungselement strahlt dann unmittelbar RFID-Signale ab beziehungsweise empfängt sie. Häufig werden dadurch keine ausreichenden Antenneneigenschaften erzielt, weshalb vorzugsweise doch ein Radiator ausgewählt und eingesetzt wird.

Durch die Auswahl von Gehäuse und Radiator ist eine modulare Antenne der vorgegebenen Bauform beziehungsweise Abmessungen mit den vorgegebenen Antenneneigenschaften hergestellt. Die Herstellung kann auch im Sinne von Umrüsten verstanden werden, da dann ebenfalls eine neue Antenne mit vorgegebenen Abmessungen und Antenneneigenschaften entsteht. Vorzugsweise werkzeuglos wird dabei das Basiselement in ein neues Gehäuse eingesetzt, das Gehäuse umgebaut und/oder ein anderer Radiator in das Gehäuse eingesetzt.

Die Erfindung hat den Vorteil, dass ein besonders einfaches, flexibles und kostengünstiges Antennendesign ermöglicht wird. Das Basiselement als komplexestes Teil einer Antenne muss nur einmalig entwickelt werden. Es deckt vorzugsweise von vornherein mehrere Frequenzbereiche ab und ist in verschiedenen Bauformen einsetzbar. Es kann im Vergleich zu individuell entwickelten Antennen in größerer Stückzahl und dadurch kostengünstiger hergestellt werden. Nur Einzelkomponenten, wie Gehäuse und Radiatoren, müssen individuell entwickelt werden. Mit einiger Wahrscheinlichkeit können solche Komponenten für das Design einer neuen Antenne wiederverwendet werden. Durch unterschiedliche Ausgestaltung der Gehäuse können unterschiedliche Anforderungen der Zielanwendung insbesondere in Bezug auf Bauform, Montageposition und verfügbaren Bauraum bedient werden. Die möglichen Antenneneigenschaften sind ebenfalls flexibel, durch Gehäuseeigenschaften, Eigenschaften des Radiators und weitere noch zu beschreibende mögliche individuelle Modifikationen. Durch den modularen Ansatz sind sogar nachträgliche Umrüstungen möglich, um eine bereits eingesetzte RFID-Lesevorrichtung nachträglich durch ein Zubehörteil an veränderte Anforderungen anzupassen, beispielsweise weil die Lesereichweite erhöht werden soll.

Die Vielzahl unterschiedlicher Gehäuse unterscheiden sich bevorzugt voneinander in Größe, Geometrie, einer Montageposition für das Basiselement und/oder einer Montageposition für einen Radiator. Größe beziehungsweise Geometrie bestimmen Bauform und Abmessungen der Antenne, sodass durch Auswahl eines passenden Gehäuses die vorgegebenen Abmessungen eingehalten werden. Die Montagepositionen für das Basiselement und einen Radiator legen die gegenseitige Kopplungsposition sowie die Position bezüglich des Gehäuses fest. Die Montageposition für einen Radiator kann außerdem bestimmen, welche Radiatoren in diesem Gehäuse einsetzbar sind.

Vorzugsweise wird ein Gehäuseteil hinzugefügt, weggenommen oder ausgetauscht. Damit wird ein Gehäuse beziehungsweise die Antenne umgebaut, statt das gesamte Gehäuse auszutauschen. Ein Beispiel ist das Aufsetzen oder Entfernen einer Haube mit mindestens einer Montageposition für einen Radiator. Mithilfe von Gehäuseteilen kann so eine Antenne umgerüstet oder aufgewertet werden.

Die Vielzahl unterschiedlicher Radiatoren unterscheiden sich bevorzugt voneinander in Größe, Geometrie, vorgesehener lateraler Position zu dem Kopplungselement, vorgesehenem Abstand zu dem Kopplungselement und/oder zusätzlichem dielektrischem Material. Größe und Geometrie haben Einfluss auf die mit dem Radiator erzielten Antenneneigenschaften sowie die möglichen Gehäuse und Montagepositionen innerhalb der Gehäuse, wo der Radiator eingesetzt werden kann. Die vorgesehene laterale Position und der vorgesehene Abstand zu dem Kopplungselement korrespondiert mit der Montageposition, die ein Gehäuse zur Verfügung stellt. Ein zusätzliches dielektrisches Material auf der vorderen und/oder der hinteren Fläche des Radiators modifiziert nochmals die Antenneneigenschaften.

Zumindest einige der vorgehaltenen Radiatoren sind bevorzugt auf einereigenen Platine angeordnet. Insbesondere schafft dies die Möglichkeit, unterschiedliche Radiatoren auf gleichartigen Platinen anzuordnen. Die vorgesehene Montageposition in einem Gehäuse kann so auf einfache Weise für unterschiedliche Radiatoren die gleiche sein, und das Einsetzen in ein Gehäuse wird standardisiert. Der Radiator hat vorzugsweise keine elektrische Verbindung zum Kopplungselement, dementsprechend muss keine elektrische Kontaktierung der Platine zu dem Basiselement beziehungsweise dessen Platine geschaffen werden.

Der ausgewählte Radiator wird bevorzugt an einer Innenwand des Gehäuses angebracht. Beispielsweise wird ein Radiator in Form einer Metallfolie an einer Innenwand angeklebt. Die vorgehaltene Vielzahl unterschiedlicher Radiatoren kann eine beliebige Mischung aus Radiatoren auf einer Art von Platinen oder mehreren Arten von Platinen, ohne Platinen sowie zur direkten Anbringung an einer Innenwand des Gehäuses sein.

Bevorzugt wird mindestens ein zusätzlicher Resonator in das Gehäuse eingesetzt. Das Gehäuse weist dafür vorzugsweise mindestens eine passende Montageposition auf. Der Resonator unterstützt den Radiator, beziehungsweise Radiator und der mindestens eine Resonator bilden gemeinsam funktional den eigentlichen Radiator. Der mindestens eine zusätzliche Resonator bietet somit Freiheitsgrade, um die vorgegebenen Antenneneigenschaften zu erzielen. Das Einsetzen mindestens eines zusätzlichen Resonators ist insbesondere zum Umrüsten oder Aufwerten einer Antenne möglich.

Bevorzugt wird eine leitfähige Fläche als Massefläche (ground plane) in das Gehäuse eingebracht. Das Gehäuse weist dafür vorzugsweise mindestens eine passende Montageposition auf. Die Massefläche bildet eine von der leitfähigen Fläche des Basiselements mit dem Kopplungselement elektrisch isolierte zweite leitfähige Schicht. Eine Massefläche kann bereits Teil des Basiselements, zum Beispiel eine Schicht einer mehrschichtigen Platine des Basiselements, oder Teil des Gehäuses sein. Das ist entweder eine Alternative zu einer erst eingesetzten Massefläche, oder die Masseflächen ergänzen einander. Zwischen mehreren Masseflächen muss eine elektrisch gut leitfähige Verbindung bestehen. Die leitfähige Fläche vergrößert dann effektiv die Massefläche des Basiselements und/oder des Gehäuses. Allgemein beeinflussen Größe, Geometrie und Position der Massefläche oder der verbundenen Masseflächen die Antenneneigenschaften, verbessern insbesondere den Antennengewinn. Die Massefläche bietet somit weitere Freiheitsgrade, um die vorgegebenen Antenneneigenschaften zu erzielen

Das Kopplungselement ist bevorzugt als Antennenpatch ausgebildet. Die Antenne wird damit zu einer modularen Patchantenne. Der Antennenpatch weist eine Größe, Geometrie, Position und sonstige Ausgestaltung auf, die mit allen Radiatoren der Vielzahl vorgehaltener Radiatoren zusammenpasst, um ein großes Spektrum an Antenneneigenschaften abzudecken.

Auf dem Basiselement wird vorzugsweise ein Leistungsteilernetzwerk insbesondere mit einer Polarisationssteuerungslogik angeordnet. Das Leistungsteilernetzwerk oder Speisenetzwerk wird zwischen dem Anschluss und dem Kopplungselement über die nun zweigeteilte Hochfrequenzverbindung verbunden. Das Kopplungselement weist nun mehrere Einspeisepunkte auf. Durch eine Polarisationssteuerungslogik, die beispielsweise mehrere Hochfrequenzleitungen und Hochfrequenzschalter aufweist, können die Einspeisepunkte mit bestimmten Leistungen und Phasen versorgt werden. Dadurch kann die Antenne mit verschiedenen Polarisationseigenschaften betrieben werden, insbesondere linear polarisiert in einer Vorzugsrichtung wie horizontal und vertikal oder zirkular polarisiert mit oder gegen den Uhrzeigersinn.

Das Kopplungselement wird bevorzugt auf der einen Fläche und das Leistungsteilernetzwerk auf der anderen Fläche des Basiselements angeordnet. Dadurch kann das Basiselement besonders kompakt ausgebildet sein, insbesondere das Kopplungselement im Wesentlichen die gesamte Fläche des Basiselements nutzen.

Der Anschluss wird bevorzugt über einen Transceiver mit einer RFID-Steuer- und Auswertungseinheit verbunden, um eine RFID-Lesevorrichtung mit der Antenne herzustellen. Je nach Ausführungsform wird somit die Antenne als externe Antenne einer RFID-Lesevorrichtung mit Transceiver und erforderlicher RFID-Steuerungslogik betrieben, oderTransceiverund RFID-Steuerungslogik werden in das Gehäuse eingebaut, um eine RFID-Lesevorrichtung mit interner Antenne aufzubauen. Die Antenne wird von der RFID-Lesevorrichtung zum Senden von RFID-Signalen an einen RFID-Transponder und/oder zum Empfangen von RFID-Signalen von einem RFID-Transponder verwendet.

Die RFID-Steuer- und Auswertungseinheit, die mindestens einen digitalen Rechenbaustein aufweist, wie einen Mikroprozessor, ein FPGA (Field Programmable Gate Array), einen ASIC (Application Specific Integrated Circuit) oder dergleichen, ist für das Eincodieren einer RFID-Information in die RFID-Signale und/oder zum Auslesen einer RFID-Information aus den RFID-Signalen ausgebildet. Transceiver und RFID-Steuer- und Auswertungseinheit können einen gemeinsamen Rechenbaustein bilden oder jedenfalls teilweise einen Rechenbaustein gemeinsam nutzen. Eine solche RFID-Lesevorrichtung wird bevorzugt in stationärer Montage an einem Lesebereich eines Förderers oder eines Leseportals zum Auslesen mindestens eines auf dem Förderer oder durch das Leseportal bewegten RFID-Transponders eingesetzt. Aufgrund des erfindungsgemäßen Antennenkonzepts ist es einfach möglich, eine modulare Antenne herzustellen, die zu der Leseanwendung passt.

Die erfindungsgemäße modulare Antenne für eine RFID-Lesevorrichtung, die vorzugsweise mit dem erfindungsgemäßen Verfahren hergestellt ist, weist durch Auswahl eines passenden Gehäuses und Radiators die vorgegebenen Abmessungen und Antenneneigenschaften auf. Besonders bevorzugt ist eine RFID-Lesevorrichtung mit einem Transceiver und einer RFID-Steuer- und Auswertungseinheit vorgesehen, die die modulare Antenne als interne oder externe Antenne nutzt. Alle beschriebenen Ausgestaltungen, Ausführungsformen und Unteransprüche des Herstellungsverfahrens sind sinngemäß auf die erfindungsgemäße modulare Antenne und die erfindungsgemäße RFID-Lesevorrichtung übertragbar und umgekehrt.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer RFID-Lesevorrichtung mit modularer Antenne;
- Fig. 2: eine schematische Darstellung eines Basiselements zur Herstellung einer modularen Antenne mit verschiedenen damit kombinierbaren Radiatoren;
- Fig. 3: eine schematische dreidimensionale Ansicht einer modularen Antenne aus einem Basiselement und einem dazu ausgewählten Radiator;
- Fig. 4: eine Schnittansicht einer modularen Antenne;
- Fig. 5a: eine schematische dreidimensionale Ansicht einer Variante A einer modularen Antenne mit kompaktem Gehäuse und Radiator;
- Fig. 5b: eine schematische dreidimensionale Ansicht einer Variante B einer modularen Antenne mit größerem Gehäuse und kompaktem Radiator;
- Fig. 5c: eine schematische dreidimensionale Ansicht einer Variante C einer modularen Antenne mit größerem Gehäuse und größerem Radiator;
- Fig. 6: eine schematische Darstellung der unterschiedlichen Antennencharakteristiken für die Varianten A bis C gemäß den Figuren 5a-c;
- Fig. 7: eine beispielhafte dreidimensionale Ansicht eines Basiselements mit kreisförmigen Antennenpatch als Kopplungselement;
- Fig. 8: eine beispielhafte dreidimensionale Ansicht einer modularen Antenne der Variante A;
- Fig. 9: eine Schnittansicht der modularen Antenne gemäß Figur 8;
- Fig. 10: eine beispielhafte dreidimensionale Ansicht einer modularen Antenne der Variante B;
- Fig. 11: eine beispielhafte dreidimensionale Ansicht einer modularen Antenne der Variante C;
- Fig. 12: eine Schnittansicht der modularen Antenne gemäß Figur 11;
- Fig. 13: eine vergleichende Darstellung des Antennengewinns in Hauptstrahlrichtung in Abhängigkeit von der Frequenz für modulare Antennen der Varianten A bis C;
- Fig. 14: Vergleichende Richtdiagramme für modulare Antennen der Varianten A bis C bei einer Frequenz von 900 MHz;
- Fig. 15: eine dreidimensionale Darstellung einer Antenne mit einem beispielhaften aufsetzbaren Patch-Resonator;
- Fig. 16: eine Schnittansicht einer Antenne mit einem aufgesetzten Patch-Resonator und einer zusätzlich eingesetzten Massefläche;
- Fig. 17: eine dreidimensionale Darstellung einer Antenne mit einer weiteren beispielhaften aufsetzbaren Haube mit drei Resonatoren; und
- Fig. 18: eine dreidimensionale Darstellung einer Antenne mit einer aufgesetzten Haube mit drei Resonatoren und einer zusätzlich eingesetzten Massefläche.

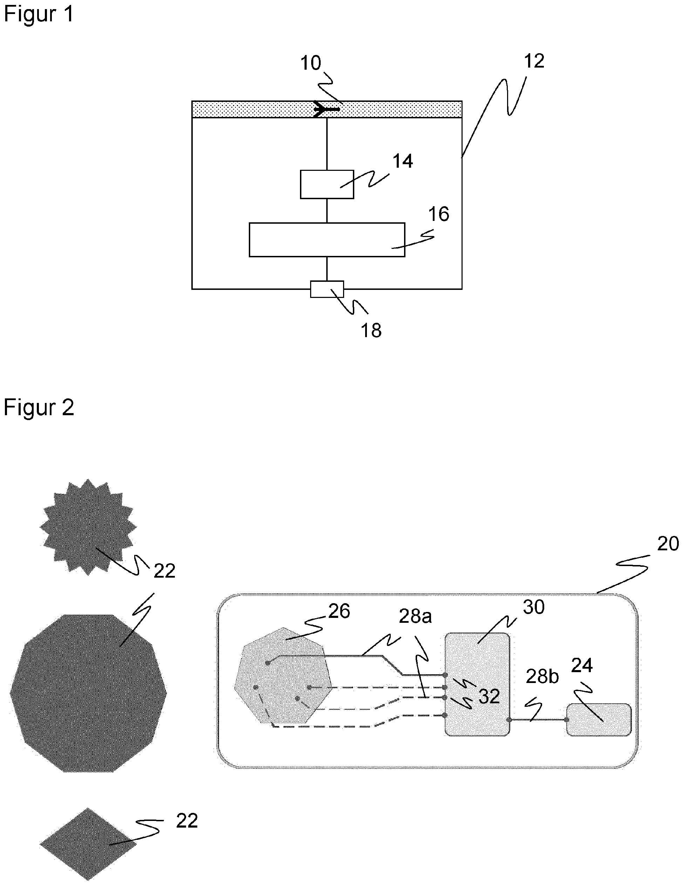

Fig. 1 eine schematische Darstellung eine modularen Antenne 10 in einer RFID-Lesevorrichtung 12. An die Antenne 10 ist ein Transceiver 14 und daran eine Steuer- und Auswertungseinheit 16 der RFID-Lesevorrichtung 12 angeschlossen, um mittels der Antenne 10 empfangene RFID-Signale auszuwerten oder Informationen als RFID-Signale an einen Transponder zu senden. Die Steuer- und Auswertungseinheit 16 ist weiterhin mit einer drahtgebundenen oder drahtlosen Schnittstelle 18 verbunden, um Daten auszutauschen, Parametrierungen vorzunehmen und dergleichen.

Die Funktionsweise einer RFID-Lesevorrichtung beispielsweise für den UHF-Frequenzbereich (Ultrahochfrequenz) nach dem Standard ISO 18000-6 ist an sich bekannt und wird deshalb nicht näher erläutert. Die Erfindung bezieht sich auf die Antenne 10 beziehungsweise deren Herstellung, wie im Anschluss unter Bezugnahme auf die weiteren Figuren 2 bis 18 detailliert beschrieben. Anstelle der dargestellten internen Antenne 10 ist auch eine externe Antenne denkbar, wobei dann Transceiver 14 und Steuer- und Auswertungseinheit 16 in mindestens einem weiteren, von der Antenne 10 getrennten und über ein Kabel angeschlossenen Gehäuse untergebracht sind.

Fig. 2 eine schematische Darstellung eines Basiselements 20 zur Herstellung einer modularen Antenne 10 mit verschiedenen damit kombinierbaren Radiatoren 22. Auf dem Basiselement 20 sind ein Anschluss 24 für eine Hochfrequenzleitung, mit der die Antenne 10 an den Transceiver 14 angeschlossen werden kann, ein Kopplungselement 26 zur Einkopplung von Hochfrequenzsignalen an ein weiteres, nicht elektrisch angebundenes Element wie einen ausgewählten der Radiatoren 22 sowie eine Hochfrequenzverbindung 28a-b zwischen Anschluss 24 und Kopplungselement 26 angeordnet.

Das Basiselement 20 ist beispielsweise eine Platine mit mindestens einer elektrisch leitfähigen Schicht. Es kann zudem eine nicht gezeigte, davon isolierte zweite leitfähige Schicht als Massefläche (ground plane) aufweisen. Das Basiselement 20 soll bei kleiner Bauform möglichst viele Komponenten enthalten, die gleichartig für den Aufbau einer modularen Antenne 10 in zahlreichen Antennenvarianten genutzt werden können. Deshalb wird das Basiselement 20 nicht nur auf eine bestimmte Ausprägung der modularen Antenne 10 optimiert, sondern vielmehr so ausgelegt, dass es bei unterschiedlichen Bauformen für verschiedene Einbausituationen und gewünschten Antenneneigenschaften zumindest hinreichend gut funktioniert. Somit kann das gleiche Basiselement 20 in größerer Anzahl vorab hergestellt werden und in einer Vielzahl von unterschiedlichen modularen Antennen 10 zum Einsatz kommen, die durch weitere Komponenten wie einen ausgewählten Radiator 22, ein Gehäuse und weitere, noch zu beschreibende Zusatzelemente individualisiert werden.

Der Anschluss 24 kann als Stecker oder Buchse für ein Koaxialkabel, als Koppelstruktur für einen Hohlleiter oder als Kontaktfläche für eine Löt- oder Steckverbindung insbesondere zu einer Platine des Transceivers 14 ausgelegt sein. Die Hochfrequenzverbindung 28 weist vorzugsweise mindestens eine Mikrostreifenleitung auf. Optional ist zwischen Anschluss 24 und Kopplungselement 26 noch ein Leistungsteilernetzwerk 30 vorgesehen, die Hochfrequenzverbindung 28 ist dann zweiteilig und verbindet einerseits den Anschluss 24 mit dem Leistungsteilernetzwerk 30 und andererseits nun über mehrere Ports 32 und zugehörige Pfade das Leistungsteilernetzwerk 30 mit dem Kopplungselement 26. Das Kopplungselement 26, insbesondere ein Antennenpatch, ist gemäß der möglichst universellen Verwendbarkeit des Basiselements 20 auf das Zusammenspiel mit verschiedenen Radiatoren 22 ausgelegt. Die Hochfrequenzsignale werden auf dem Basiselement 20 an das Kopplungselement 26 weitergeleitet und dort in metallische Strukturen wie mindestens einen Radiator22 eingekoppelt. Es ergibt sich eine gerichtete Abstrahlung der elektromagnetischen Signale weg von dem Basiselement 20 beziehungsweise dessen Massefläche. Wenn das optionale Leistungsteilernetzwerk 30 vorgesehen ist, weist das Kopplungselement 26 mehrere Einspeisepunkte entsprechend den Ports 32 auf. Die Aufteilung des Hochfrequenzsignals beispielsweise durch Hochfrequenzschalter kann von einer Polarisationslogik des Leistungsteilernetzwerks 30 genutzt werden, um elektromagnetische Wellen unterschiedlicher Polarisation zu erzeugen beziehungsweise zu empfangen.

Die Radiatoren 22 können auf einer weiteren Platine realisiert werden, die keine elektrisch leitfähige Kontaktierung zu dem Basiselement 20 benötigt. Alternativ sind metallische Strukturen denkbar, die mit ohnehin vorhandenen Komponenten kombiniert werden, beispielsweise als selbstklebende metallisierte Folie auf einer Innenseite einer Abdeckung beziehungsweise eines Gehäuses. Beispielsweise durch Verwendung zusätzlicher Dielektrika oder kompakte Antennenstrukturen wie in der einleitend genannten EP 2 790 269 A1 können Radiatoren 22 bei gleicher Resonanzfrequenz in unterschiedlichen Größen realisiert werden.

Die Antennenparameter oder Antenneneigenschaften der verschiedenen Varianten einer modularen Antenne 10 ergeben sich aus der Kombination des jeweils gleichen Basiselements 20 mit mindestens einem ausgewählten der verschiedenen Radiatoren 22. Dabei spielen Abmessungen und Form des Radiators 22, dessen Positionierung und vor allem Abstand zum Basiselement 20 sowie ein mögliches zusätzliches dielektrisches Material auf der Vorder- und/oder Rückfläche eine Rolle. Wie schon erwähnt, haben weitere Komponenten wie das Gehäuse, zusätzliche Resonatoren oder zusätzliche metallische Flächen als Massefläche oder Reflektor ebenfalls einen Einfluss auf die Antenneneigenschaften. Die Ausdifferenzierung der Antenneneigenschaften kann über Komponenten erfolgen, die mit möglichst geringem Materialaufwand beziehungsweise Herstellungsaufwand erzeugt werden können, beispielsweise ohne weitere Platine oder mit einfachen Platinen ohne zusätzliche bestückte Bauelemente. Das Basiselement 20 und dessen Komponenten, insbesondere das Kopplungselement 26, könnten ebenfalls variiert werden, um Antenneneigenschaften zu ändern, aber stattdessen wird jeweils das gleiche Basiselement 20 eingesetzt.

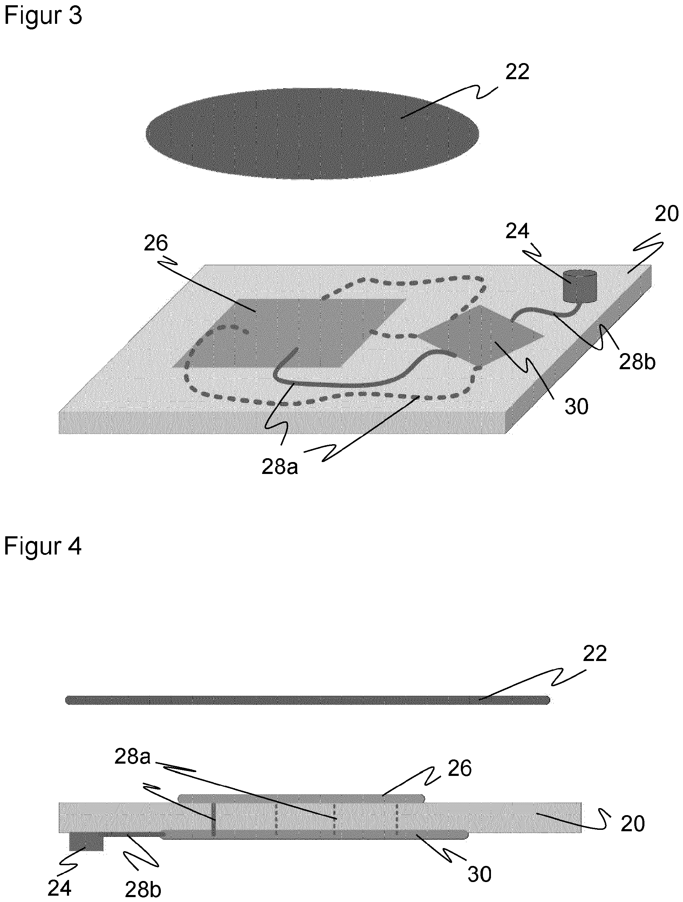

Figur 3 zeigt eine schematische dreidimensionale Ansicht einer modularen Antenne 10 aus einem Basiselement 20, zu dem nun einer der Radiatoren 22 ausgewählt und in geeigneter Position zu dem Kopplungselement 26 angeordnet wurde. Für den Verbleib von Basiselement 20 und Kopplungselement 26 in den jeweiligen Positionen sorgt vorzugsweise ein hier nicht gezeigtes Gehäuse mit entsprechenden Aufnahmen.

Figur 4 zeigt eine Schnittansicht einer modularen Antenne 10. Dies entspricht weitgehend der modularen Antenne 10 der Figur 3. Allerdings sind nun einige Komponenten, hier Kopplungselement 26 einerseits und Leistungsteilernetzwerk 30 andererseits, auf der Vorderfläche und Rückfläche einer Platine des Basiselements 20 angeordnet. Ein Basiselement 20 gemäß dieser Ausführungsform kann noch kompakter bleiben.

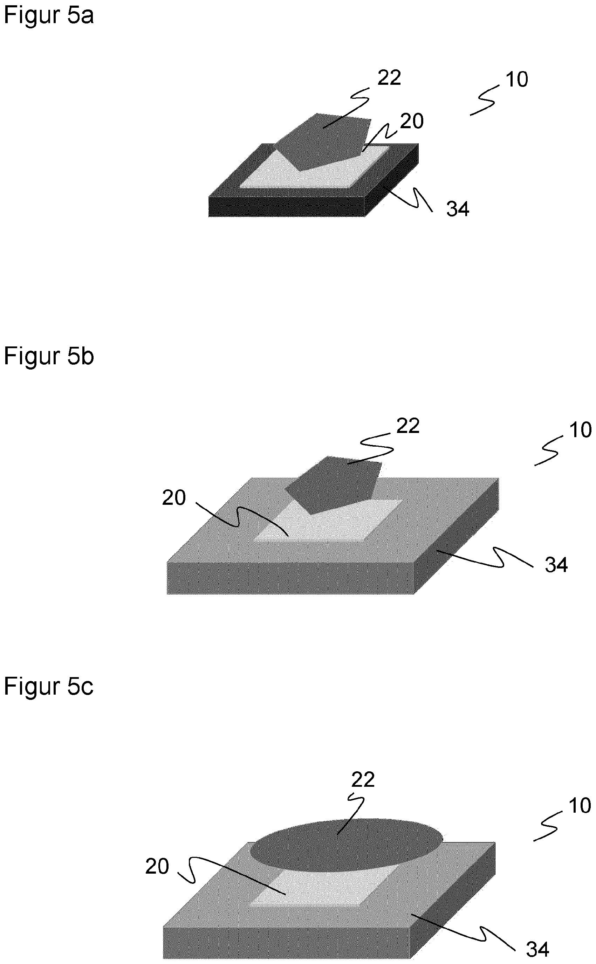

Die Figuren 5a-c zeigen sehr schematisch drei Varianten A bis C einer modularen Antenne 10. Gezeigt ist jeweils nur das über die Varianten A bis C hinweg gleiche Basiselement 20 mit seinem Kopplungselement 26 und der je nach Variante A bis C dazu ausgewählte Radiator 22 beziehungsweise das dazu ausgewählte Gehäuse 34, wobei von dem Gehäuse nur ein für die Antenneneigenschaften relevanter Anteil dargestellt ist, der als Massefläche beziehungsweise Reflektor fungiert. Figur 5a zeigt Variante A mit kompaktem Radiator 22 und kompaktem Gehäuse 34, Figur 5b zeigt Variante B mit kompaktem Radiator 22 und größerem Gehäuse 34 mit größerer leitfähiger Fläche, und Figur 5c zeigt Variante C mit größerem Radiator 22 und größerem Gehäuse 34. Es versteht sich, dass damit nur eine kleine Auswahl möglicher Kombinationen dargestellt wird, um das Prinzip zu verdeutlichen, es sind verschiedenste Radiatoren 22 und/oder Gehäusen 34 kombinierbar. Dadurch lassen sich modulare Antennen 10 unterschiedlichster Bauformen und Antenneneigenschaften aufbauen, etwa hinsichtlich Frequenzbereich, Antennengewinn (Gain), Öffnungswinkel, Achsenverhältnis, Front-to-Back Ratio, Anpassung und/oder Stehwellenverhältnis (VSWR, Voltage Standing Wave Ratio).

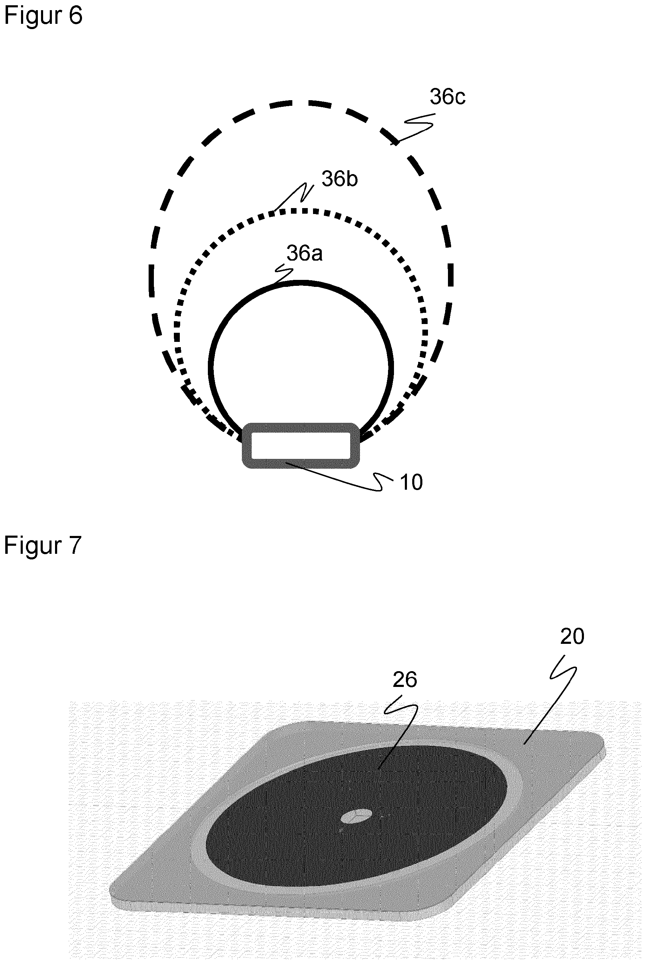

Figur 6 zeigt eine sehr schematische Darstellung der unterschiedlichen Antennencharakteristiken für die Varianten A bis C gemäß den Figuren 5a-c. Die durchgezogene Linie 36a entspricht der Variante A der Figur 5a, die gepunktete Linie 36b der Variante B der Figur 5b und die gestrichelte Linie 36c der Variante C der Figur 5c.

Figur 7 zeigt ein Simulationsmodell eines beispielhaften Basiselements 20 als mehrlagige Platine mit Abmessungen von 120mmx120mm mit einem kreisförmigen Patch von 94mm Durchmesser als Kopplungselement 26 auf der Oberseite. Die Speisung beziehungsweise Hochfrequenzverbindung 28a-b ist hier durch Vias und Mikrostreifenleitungen auf der Platinenrückseite oder in einer unteren Lage der Platine realisiert. Die Abmessungen des Basiselements 20 legen die minimal möglichen Abmessungen der Varianten einer damit aufgebauten Familie von modularen Patchantennen 10 fest. In einer besonders einfachen Ausführungsform wäre denkbar, das Basiselement 20 unmittelbar als Antenne 10 zu nutzen, also keinen Radiator 22 damit zu kombinieren. Der Wirkungsgrad ausgedrückt als Antennengewinn im Vergleich zum genutzten Volumen wird so aber vergleichsweise schlecht. Denkbar wäre das für Anwendungen mit sehr kurzer Lesedistanz zu den RFID-Transpondern oder zur gezielten Vermeidung von Überreichweiten etwa bei einem Verkaufstresen im Einzelhandel mit Auflegen der zu lesenden RFID-Transponder. Vorzugsweise wird für die meisten realen Anwendungssituationen mindestens ein Radiator 22 kombiniert, um die Antenneneigenschaften zu verbessern.

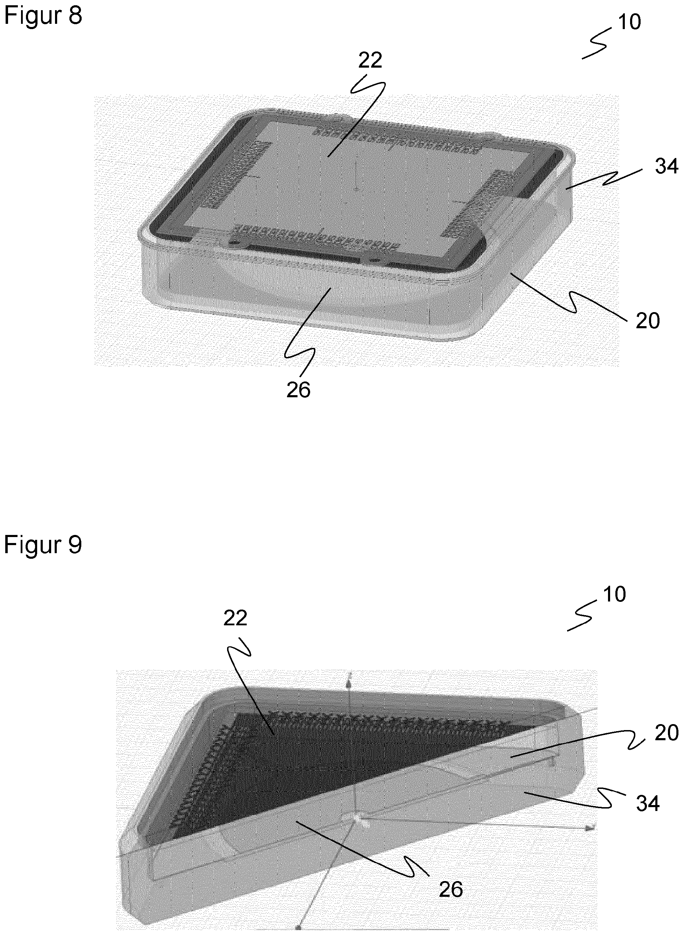

Die Figuren 8 bis 12 zeigen die rein schematischen Varianten A bis C der modularen Antenne 10 gemäß Figur 5a-c nochmals in detaillierteren Simulationsmodellen. Es wird jeweils das in Figur 7 dargestellte Basiselement 20 in einem nach oben offenen metallischen Gehäuse 34 untergebracht und darüber ein Radiator 22 angeordnet. In den Varianten A bis C sind unterschiedliche Radiatoren 22 und Gehäuse verwendet, wobei der Abstand des Radiators 22 über die Varianten hinweg gleich bleiben oder unterschiedlich sein kann. Das Gehäuse 34 kann alternativ nicht metallisch sein, dadurch vergrößert sich der Öffnungswinkel der Antenne 10, und entsprechend verringert sich der Antennengewinn in der Hauptstrahlrichtung.

Figur 8 zeigt eine beispielhafte dreidimensionale Ansicht der Variante A der Antenne 10 und Figur 9 eine zugehörige Schnittansicht. Der Radiator 22 ist dabei relativ klein, ähnlich dimensioniert wie der Patch des Kopplungselements 26, und es ist ein entsprechend kleines Gehäuse 34 verwendet. Die kleinteilige Struktur des Radiators 22 ist ebenso wie seine konkrete Form und Größe insgesamt nur als ein beliebiges Beispiel zu verstehen.

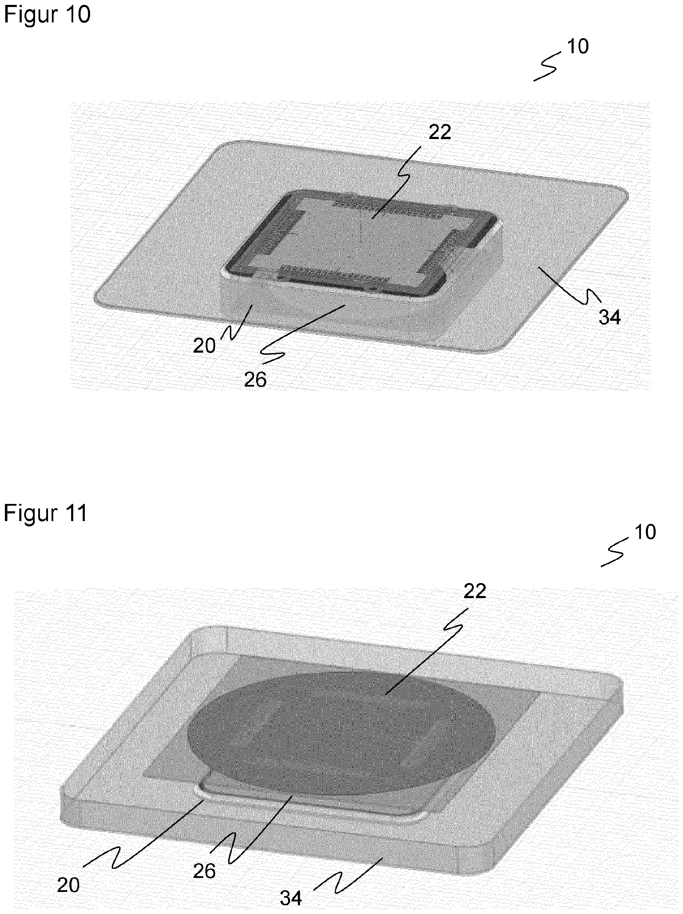

Figur 10 zeigt eine beispielhafte dreidimensionale Ansicht der Variante B der Antenne 10. Der Radiator 22 ist der gleiche wie in Variante A, so wurde die Wahlfreiheit des Radiators 22 in diesem Beispiel der Variante B ausgenutzt. Das Gehäuse 34 weist jedoch eine vergrößerte metallische Fläche auf, oder es ist in einer alternativen, nur begrifflich und nicht technisch anderen Betrachtungsweise eine solche metallische Fläche insbesondere als entsprechendes Gehäuseteil hinzugekommen. Diese zusätzliche Reflektorfläche erhöht den Antennengewinn, reduziert den Öffnungswinkel der Antenne 10 und erhöht das Front-to-Back-Ratio.

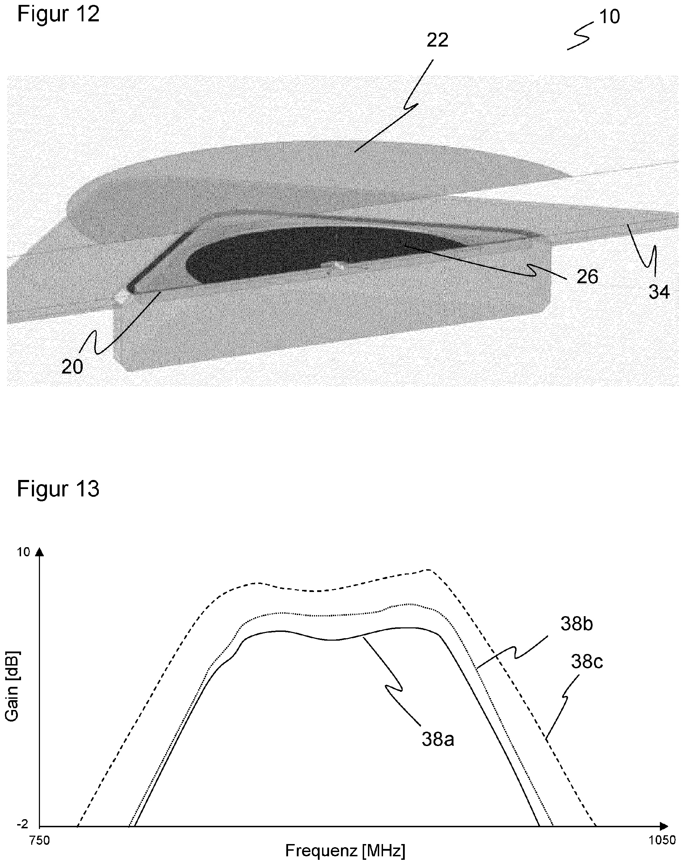

Figur 11 zeigt eine beispielhafte dreidimensionale Ansicht der Variante C der Antenne 10 und Figur 12 eine zugehörige Schnittansicht. Es wird weiterhin ein vergrößertes Gehäuse 34 verwendet wie bei der Variante B, und nun ist auch der Radiator 22 deutlich größer und weist überdies statt der grob rechteckförmigen, im einzelnen sehr komplexen Struktur der Varianten A und B eine einfache Kreisform auf. Wie in allen Ausführungsformen ist die konkrete Ausgestaltung des Radiators 22 der Variante C als reines Beispiel zu verstehen.

Figur 13 zeigt eine vergleichende Darstellung des Antennengewinns in Abhängigkeit von der Frequenz für modulare Antennen 10 der Varianten A bis C nach den zu den Figuren 8 bis 12 vorgestellten Simulationsmodellen. Dabei entspricht die durchgezogene Linie 38a der Variante A gemäß den Figuren 8 und 9, die gepunktete Linie 38b der Variante B gemäß Figur 10 und die gestrichelte Linie 38c der Variante C gemäß den Figuren 11 und 12. Aufgetragen ist der Antennengewinn (circular polarized realized gain in dBic, d,h. inklusive Verlusten in den verwendeten Materialien und Leitungen, nicht nur die Richtwirkung, dies in Hauptstrahlrichtung mit Theta=0°, Phi=0°) als Funktion der Frequenz in einem Ultrahochfrequenzbereich zwischen ca. 800 MHz und 1000 MHz.

Da alle Varianten A bis C das gleiche Basiselement 20 verwenden, sind der unterschiedliche Antennengewinn und die teilweise größere Bandbreite auf die unterschiedlichen Radiatoren 22 beziehungsweise Gehäuse 34 zurückzuführen. Mit zunehmender Größe dieser individuellen Komponenten wird der Antennengewinn höher: Variante A erreicht im gewünschten Frequenzband von 865 MHz bis 928 MHz einen Gewinn von 6,1 dBic, Variante B erreicht 7,1 dBic, und Variante C erreicht 8,2 dBic. Zum Vergleich wird mit dem Basiselement 20 allein, also ohne Radiator 22 und ohne zusätzliche Massefläche eines Gehäuses 34, im gleichen Frequenzband ein Gewinn von etwa -5 dBic erzielt.

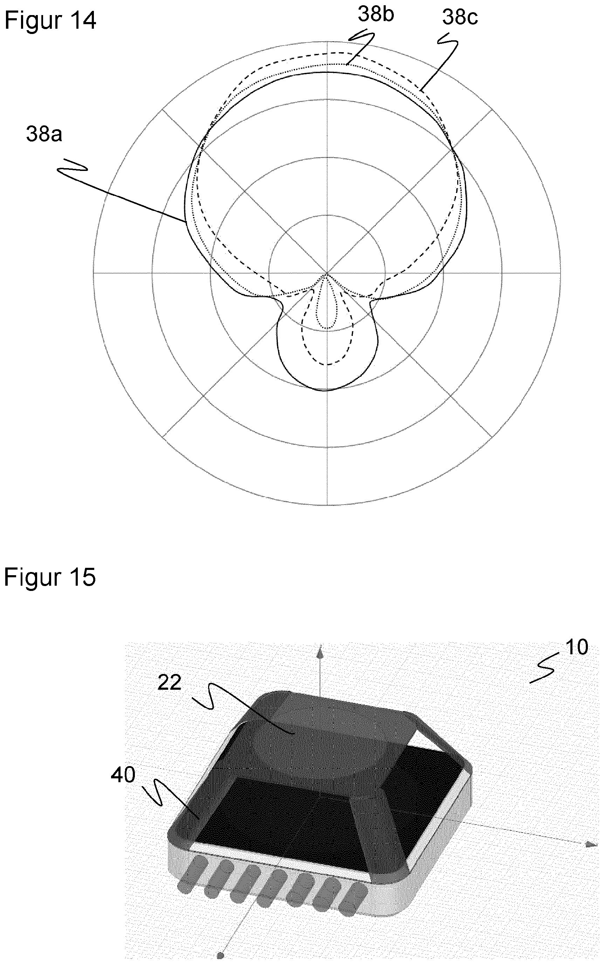

Figur 14 zeigt mit gleicher Konvention der Linien 38a-c wie in Figur 13 vergleichende Richtdiagramme für modulare Antennen 10 der Varianten A bis C bei einer Frequenz von 900 MHz. Es ist deutlich zu erkennen, dass sich mit dem Antennengewinn auch der 3dB-Öffnungswinkel und das Verhältnis der nach vorne und hinten abgestrahlten Leistung (Front-to-Back Ratio) ändern.

Die Anpassung der Antenneneigenschaften ist nicht allein durch Einbau das Basiselements 20 in unterschiedliche Gehäuse 34 möglich, sondern auch durch Montage von Zubehörteilen an bereits aufgebaute Antennen 10. Das ist dann nicht auf die Produktion beschränkt, sondern ermöglicht ein besonders einfaches Umrüsten oder Aufwerten im Feld. Die Figuren 15 bis 18 zeigen einige beispielhafte Varianten von Zubehörteilen.

Figur 15 ist eine dreidimensionale Darstellung einer Antenne 10 mit einem beispielhaften aufsetzbaren Patch-Resonator. Dabei kann es sich um den Radiator 22 oder einen zusätzlichen Resonator handeln. Vorzugsweise ist eine Art Haube 40 für das Gehäuse 34 vorgesehen, die den Resonator in eine passende Position mit dem vorgesehenen Abstand zu dem Kopplungselement 26 bringt. Die Form der Haube 40 als Pyramidenstumpf ist als Beispiel zu verstehen, für eine häufige Quaderform des Gehäuses 34 aber besonders geeignet.

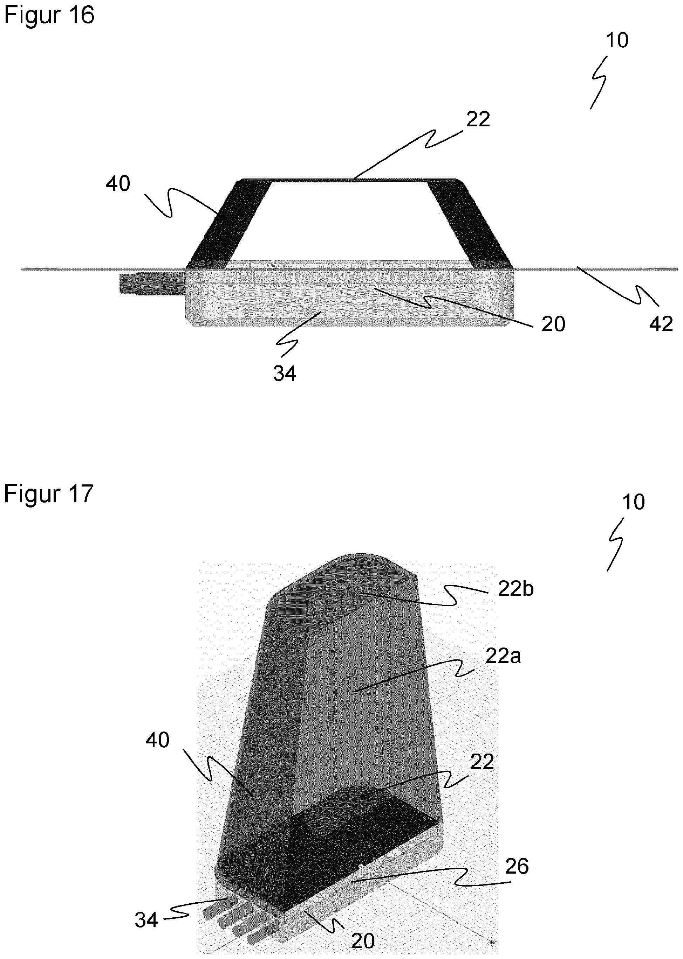

Figur 16 zeigt eine Schnittansicht einer Antenne 10 mit einem aufgesetzten Patch-Resonator ähnlich demjenigen der Figur 15 und einer zusätzlich eingesetzten Massefläche 42, die Teil des Gehäuses 34 oder nachträglich eingesetzt sein kann. Die Massefläche 42 modifiziert die Antenneneigenschaften weiter, und diese Modifikation kann durch Material, Größe, Form und Position der Massefläche verändert werden.

Figur 17 zeigt eine dreidimensionale Darstellung einer Antenne 10 mit einer weiteren beispielhaften aufsetzbaren Haube 40 mit drei Resonatoren 22, 22a, 22b. Die zusätzlichen Resonatoren 22a-b passen die Antenneneigenschaften weiter an. Es ist denkbar, eine variable Anzahl von Resonatoren 22a-b sowie unterschiedliche Größen, Formen und Positionen in der Haube 40 oder Varianten einer Haube zuzulassen, um so weitere individuelle Antennen 10 zu erhalten.

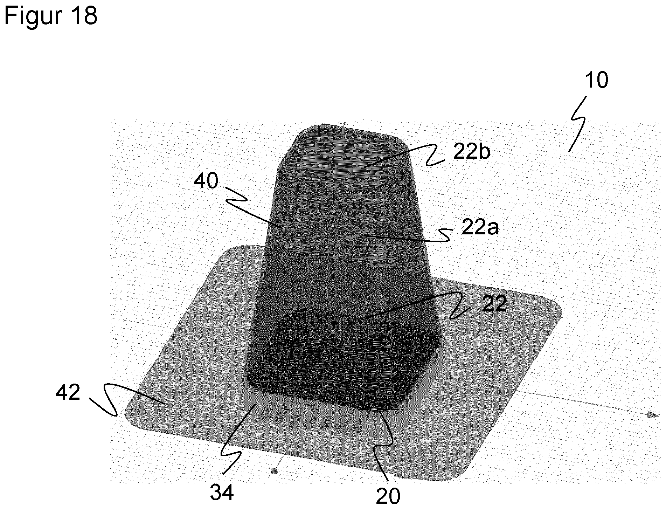

Figur 18 zeigt eine dreidimensionale Darstellung einer Antenne 10 mit einer aufsetzbaren Haube 40 mit drei Resonatoren 22, 22a, 22b sowie einer zusätzlich eingesetzten metallischen Massefläche 42. Damit werden gleichsam die Modifikationsmöglichkeiten der Figuren 16 und 17 zur Veranschaulichung kombiniert.

Die jeweiligen Resonatoren benötigen keine leitfähige Anbindung und erlauben eine gewisse Toleranz bei der Positionierung. Das vereinfacht eine sogar werkzeuglose Montage beispielsweise durch eine Haube 40 aus Kunststoff, in der die Resonatoren durch federnde Elemente wie einen Schnapp- oder Klickverschluss eingerastet und in Position gehalten werden. Die Massefläche der Figuren 16 und 18 können durch metallisch leitfähige Verbindungen, beispielsweise Schrauben, montiert werden, um für die leitfähige Anbindung zu sorgen und die gewünschte Verbesserung der Antenneneigenschaften zu erreichen.

## Patentansprüche

1. Verfahren zur Herstellung einer modularen Antenne (10) mit vorgegebenen Abmessungen und Antenneneigenschaften für eine RFID-Lesevorrichtung (12), wobei zunächst eine Vielzahl von untereinander gleichartigen Basiselementen (20) hergestellt wird, auf denen jeweils ein Kopplungselement (26) mit mindestens einem Einspeisepunkt, ein Anschluss (24) für eine Hochfrequenzleitung und eine Hochfrequenzverbindung (28a-b) zwischen Anschluss (24) und Einspeisepunkt angeordnet ist, und eines der Basiselemente (20) anschließend in ein Gehäuse (34) eingesetzt wird, wobei eine Vielzahl unterschiedlicher Gehäuse (34) vorgehalten wird und ein Gehäuse (34) mit den vorgegebenen Abmessungen ausgewählt wird, um das Basiselement (20) in das Gehäuse (34) einzusetzen
**dadurch gekennzeichnet,**
**dass** eine Vielzahl unterschiedlicher Radiatoren (22) vorgehalten wird und kein Radiator oder einer der Radiatoren (22) ausgewählt und in einer Kopplungsposition zu dem Kopplungselement (26) in das Gehäuse (34) eingesetzt wird, um durch die jeweilige Auswahl eine modulare Antenne (10) mit den vorgegebenen Abmessungen und Antenneneigenschaften herzustellen.

2. Verfahren nach Anspruch 1,
wobei die Vielzahl unterschiedlicher Gehäuse (34) sich voneinander in Größe, Geometrie, einer Montageposition für das Basiselement (20) und/oder einer Montageposition für einen Radiator (22) unterscheiden.

3. Verfahren nach Anspruch 1 oder 2,
wobei ein Gehäuseteil (34, 40) hinzugefügt, weggenommen oder ausgetauscht wird.

4. Verfahren nach einem der vorhergehenden Ansprüche,
wobei die Vielzahl unterschiedlicher Radiatoren (22) sich voneinander in Größe, Geometrie, vorgesehener lateraler Position zu dem Kopplungselement (26), vorgesehenem Abstand zu dem Kopplungselement (26) und/oder zusätzlichem dielektrischem Material unterscheiden.

5. Verfahren nach einem der vorhergehenden Ansprüche,
wobei zumindest einige der vorgehaltenen Radiatoren (22) auf einer eigenen Platine angeordnet sind.

6. Verfahren nach einem der vorhergehenden Ansprüche,
wobei der ausgewählte Radiator (22) an einer Innenwand des Gehäuses (34) angebracht wird.

7. Verfahren nach einem der vorhergehenden Ansprüche,
wobei mindestens ein zusätzlicher Resonator (22a-b) in das Gehäuse (34, 40) eingesetzt wird.

8. Verfahren nach einem der vorhergehenden Ansprüche,
wobei eine leitfähige Fläche als Massefläche (34) in das Gehäuse (34) eingebracht wird.

9. Verfahren nach einem der vorhergehenden Ansprüche,
wobei das Kopplungselement (26) als Antennenpatch ausgebildet ist.

10. Verfahren nach einem der vorhergehenden Ansprüche,
wobei auf dem Basiselement (20) ein Leistungsteilernetzwerk (30) insbesondere mit einer Polarisationssteuerungslogik angeordnet wird.

11. Verfahren nach einem der vorhergehenden Ansprüche,
wobei das Kopplungselement (26) auf der einen Fläche und das Leistungsteilernetzwerk (30) auf der anderen Fläche des Basiselements (20) angeordnet wird.

12. Verfahren nach einem der vorhergehenden Ansprüche,
wobei der Anschluss über einen Transceiver (14) mit einer RFID-Steuer- und Auswertungseinheit (16) verbunden wird, um eine RFID-Lesevorrichtung (12) mit der Antenne (10) herzustellen.

## Claims

1. A method for manufacturing a modular antenna (10) having predetermined dimensions and antenna properties for an RFID reading device (12), wherein first a plurality of base elements (20) of the same type as one another are manufactured, on each of which a coupling element (26) with at least one feed point, a connection (24) for a high-frequency line and a high-frequency connection (28a-b) between connection (24) and feed point is arranged, and one of the base elements (20) is then inserted into a housing (34), wherein a plurality of different housings (34) is provided and a housing (34) with the predetermined dimensions is selected in order to insert the base element (20) into the housing (34),
**characterized in that** a plurality of different radiators (22) is provided and no radiator or one of the radiators (22) is selected and inserted into the housing (34) in a coupling position relative to the coupling element (26), in order to manufacture a modular antenna (10) having the predetermined dimensions and antenna properties by means of the respective selection.

2. The method according to claim 1,
wherein the plurality of different housings (34) differ from each other in size, geometry, a mounting position for the base element (20) and/or a mounting position for a radiator (22).

3. The method according to claim 1 or 2,
wherein a housing part (34, 40) is added, removed or replaced.

4. The method according to any of the preceding claims,
wherein the plurality of different radiators (22) differ from each other in size, geometry, intended lateral position to the coupling element (26), intended distance to the coupling element (26) and/or additional dielectric material.

5. The method according to any of the preceding claims,
wherein at least some of the provided radiators (22) are arranged on a separate circuit board.

6. The method according to any of the preceding claims,
wherein the selected radiator (22) is attached to an inner wall of the housing (34).

7. The method according to any of the preceding claims,
wherein at least one additional resonator (22a-b) is inserted into the housing (34, 40).

8. The method according to any of the preceding claims,
wherein a conductive surface is introduced into the housing (34) as a ground surface (34).

9. The method according to any of the preceding claims,
wherein the coupling element (26) is formed as an antenna patch.

10. The method according to any of the preceding claims,
wherein a power divider network (30) is arranged on the base element (20), in particular with a polarization control logic.

11. The method according to any of the preceding claims,
wherein the coupling element (26) is arranged on one surface and the power divider network (30) is arranged on the other surface of the base element (20).

12. The method according to any of the preceding claims,
wherein the connector is connected via a transceiver (14) to an RFID control and evaluation unit (16) to manufacture an RFID reading device (12) with the antenna (10).

## Revendications

1. Procédé de fabrication d'une antenne modulaire (10), présentant des dimensions et des propriétés d'antenne prédéfinies, pour un dispositif de lecture RFID (12),
dans lequel on fabrique d'abord une pluralité d'éléments de base (20) identiques entre eux, sur lesquels sont disposés respectivement un élément de couplage (26) avec au moins un point d'alimentation, un raccord (24) pour une ligne haute fréquence et une liaison haute fréquence (28a-b) entre le raccord (24) et le point d'alimentation, et on insère ensuite l'un des éléments de base (20) dans un boîtier (34), dans lequel on fournit une pluralité de boîtiers différents (34), et on choisit un boîtier (34) ayant les dimensions prédéfinies, pour insérer l'élément de base (20) dans le boîtier (34), **caractérisé en ce que**
on fournit une pluralité de radiateurs (22) différents, et on ne choisit aucun radiateur ou on choisit l'un des radiateurs (22) et on l'insère dans le boîtier (34) dans une position de couplage par rapport à l'élément de couplage (26), afin de fabriquer, par le choix respectif, une antenne modulaire (10) présentant les dimensions et les propriétés d'antenne prédéfinies.

2. Procédé selon la revendication 1,
dans lequel la pluralité de boîtiers différents (34) se distinguent les uns des autres par leur taille, par leur géométrie, par une position de montage de l'élément de base (20) et/ou par une position de montage d'un radiateur (22).

3. Procédé selon la revendication 1 ou 2,
dans lequel on ajoute, on retire ou on remplace une partie de boîtier (34, 40).

4. Procédé selon l'une des revendications précédentes,
dans lequel la pluralité de radiateurs différents (22) se distinguent les uns des autres par leur taille, par leur géométrie, par leur position latérale prévue par rapport à l'élément de couplage (26), par leur distance prévue par rapport à l'élément de couplage (26) et/ou par leur matériau diélectrique supplémentaire.

5. Procédé selon l'une des revendications précédentes,
dans lequel au moins quelques-uns des radiateurs (22) fournis sont disposés sur une platine distincte.

6. Procédé selon l'une des revendications précédentes,
dans lequel on monte le radiateur (22) choisi sur une paroi interne du boîtier (34).

7. Procédé selon l'une des revendications précédentes,
dans lequel on insère au moins un résonateur supplémentaire (22a-b) dans le boîtier (34, 40).

8. Procédé selon l'une des revendications précédentes,
dans lequel on introduit une surface conductrice à titre de plan de masse (34) dans le boîtier (34).

9. Procédé selon l'une des revendications précédentes,
dans lequel l'élément de couplage (26) est conçu comme un patch d'antenne.

10. Procédé selon l'une des revendications précédentes,
dans lequel on place un réseau diviseur de puissance (30), comportant en particulier une logique de commande de polarisation, sur l'élément de base (20).

11. Procédé selon l'une des revendications précédentes,
dans lequel on place l'élément de couplage (26) sur une face de l'élément de base (20), et on place le réseau diviseur de puissance (30) sur l'autre face dudit élément de base.

12. Procédé selon l'une des revendications précédentes,
dans lequel on relie le raccord à une unité de commande et d'évaluation RFID (16) par l'intermédiaire d'un émetteur-récepteur (14), afin de fabriquer un dispositif de lecture RFID (12) avec l'antenne (10).
